# EUROPEAN PATENT APPLICATION

(11) **EP 1 666 417 A1**
(43) Date of publication of application: **07.06.2006**
(21) Application number: 05257409.2
(22) Date of filing: 01.12.2005
(51) Int. Cl.: C01F 7/44

(54) **A method for producing a needle-like aluminum hydroxide**

(30) Priority: 03.12.2004 JP 2004351013
(71) Applicant: Sumitomo Chemical Company, Limited, Tokyo 104-8260 (JP)
(72) Inventor: Takemura, Kazuki, Niihama-shi, Ehime (JP); Nippa, Satoru, Chiba-shi, Chiba (JP)
(74) Representative: Duckett, Anthony Joseph

(57) **Abstract**

A method for producing a needle-like aluminum hydroxide is provided. The method for producing a needle-like aluminum hydroxide comprises steps of:
(1) mixing an aluminum monohydroxide and an aluminum trihydroxide; and
(2) hydrothermally treating the mixture in the presence of magnesium.

## Description

### FIELD OF THE INVENTION

The present invention relates to a method for producing a needle-like aluminum hydroxide.

### BACKGROUND OF THE INVENTION

An aluminum hydroxide is used as a filler for olefin resin. An aluminum hydroxide is also used as a nucleating agent for olefin resin. In the latter case, it is preferable that the aluminum hydroxide is in form of needle and has a large specific surface area.

As the method for producing a needle-like aluminum hydroxide, a method of hydrothermally treating an aluminum hydroxide in the presence of magnesium is known (JP-A -2000-239014).

However, the method described in this publication does not produce a needle-like aluminum hydroxide having sufficient specific surface area.

### SUMMARY OF THE INVENTION

The present inventors have studied to develop a method for producing a needle-like aluminum hydroxide having a large BET specific surface area, and resultantly leading to completion of the present invention.

The present invention provides a method for producing a needle-like aluminum hydroxide comprising steps of:
(1) mixing an aluminum monohydroxide and an aluminum trihydroxide ; and
(2) hydrothermally treating the obtained mixture in the presence of magnesium.

### BRIEF DESCRIPTION OF THE DRAWINGS

Fig. 1 shows a transmission electron microscope (hereinafter, abbreviated to "TEM") image (magnification: 400000) of the aluminum monohydroxide (trade name "CATAPAL D").
Fig. 2 shows a TEM image(magnification: 50000) of an aluminum hydroxide obtained in Example 1.
Fig. 3 shows a TEM image(magnification: 50000) of an aluminum hydroxide obtained in Example 2.
Fig. 4 shows a scanning electron microscope (hereinafter, abbreviated to SEM) image(magnification: 5000) of an aluminum hydroxide obtained in Comparative Example 1.
Fig. 5 shows a TEM image(magnification: 400000) of an aluminum hydroxide obtained in Comparative Example 2.

### DETAILED DESCRIPTION

The method for producing a needle-like aluminum hydroxide of the present invention includes step(1) of mixing an aluminum monohydroxide and an aluminum trihydroxide.

The aluminum monohydroxide has a main crystal phase of boehmite and may contain an aluminum hydroxide having a different crystal phase from boehmite or having amorphous aluminum hydroxide. Examples of the aluminum hydroxide having a different crystal phase from boehmite include bayerite or gibbsite. The crystal phase may be determined by a powder X-ray diffraction.
In case the aluminum monohydroxide includes bayerite or gibbsite, a main peak intensity of bayerite or gibbsite in the aluminum monohydroxide is 5% or less than a main peak intensity of boehmite.

The aluminum monohydroxide may have a BET specific surface area of usually 100 m²/g or more, preferably 150 m²/g or more and usually 500 m²/g or less, preferably 400 m²/g or less. Since the aluminum monohydroxide having a large BET specific surface area may provide a needle-like aluminum hydroxide having a large BET specific surface area, the aluminum monohydroxide having large BET specific surface area is preferable.

The aluminum monohydroxide may have an average particle size of usually 0.01 µm or more, 100 µm or less, preferably 60µm or less.

The aluminum trihydroxide has a main crystal structure of gibbsite and may contain an aluminum hydroxide having a different crystal phase from gibbsite or having amorphous aluminum hydroxide. Examples of the aluminum hydroxide having a different crystal phase from gibbsite include boehmite or bayerite . The crystal phase may be determined by a powder X-ray diffraction as well as the aluminum monohydroxide. In case the aluminum trihydroxide includes boehmite or bayerite, a main peak intensity of boehmite or bayerite in the aluminum trihydroxide is 5% or less than a main peak intensity of gibbsite.

The aluminum trihydroxide may have a BET specific surface area of 5 m²/g or more, and usually 100 m²/g or less, preferably 60 m²/g or less; an average particle size of usually 0.1 µm or more, preferably 0.2 µm or more and usually 5 µm or less, preferably 2 µm or less; and a sodium content of, in terms of Na₂O, usually 0.01% or more by weight, preferably 0.05% or more by weight and usually 2% or less by weight, preferably 1% or less by weight.

The amount ratio (W_{M/}W_{T}) is usually from 1/99 to 20/80, preferably from 5/95 to 15/85, more preferably from 10/90 to 15/85. W_{M} represents the amount of aluminum monohydroxide by weight. W_{T} represents the amount of aluminum trihydroxide by weight. When the amount ratio is changed, a needle-like aluminum hydroxide having different BET specific surface area is obtained. For example, in case the portion of the aluminum trihydroxide is little, a needle-like aluminum hydroxide having a larger BET specific surface area is obtained. On the other hand, in case the portion of the aluminum trihydroxide is much, a needle-like aluminum hydroxide having a smaller BET specific surface area is obtained.

The method for producing a needle-like aluminum hydroxide includes further step(2) of hydrothermally treating the mixture obtained in the step(1) in the presence of magnesium.

The magnesium may be present in any form. For example, the magnesium is present in form of salt or ion, preferably ion. Usually the hydrothermal treatment may be carried out in water to which a magnesium salt, preferably water soluble magnesium salt is added. Examples of the magnesium salt include magnesium carboxylate such as magnesium formate, magnesium acetate, magnesium propionate, magnesium oxalate, magnesium glutarate, magnesium succinate, magnesium malonate, magnesium maleate, magnesium adipate and magnesium citrate. An amount of magnesium is usually 0.01 moles or more, preferably 0.1 moles more and usually 5 moles or less, preferably 3 moles or less based on 1 L of water

An amount of the water is usually 2 times or more by weight, preferably 5 times or more by weight and usually 100 times or less by weight, preferably 30 times or less by weight based on the total amount of aluminum monohydroxide and aluminum trihydroxide. In case the water amount is little, viscosity of aqueous slurry containing the mixture may be high. In case the water amount is large, the production efficiency may be low.

The hydrothermal treatment may be carried out at usually 150 °C or higher, preferably 170 °C or higher and usually 300 °C or lower, preferably 230 °C or lower, for usually 0.2 hours or more, preferably 0.5 hours or more and usually 100 hours or less, preferably 50 hours or less.

The hydrothermal treatment may be carried out under pressure of usually equal to or more than the vapor pressure of water at the treatment temperature mentioned above.

Further, the hydrothermal treatment may be carried out under the condition of regulated hydrogen ion concentration.
The hydrogen ion concentration may be regulated by adding alkali such as sodium hydroxide, aqueous ammonia to the mixture obtained in step(1). When the aluminum trihydroxide contains alkali such as sodium hydroxide, the hydrogen ion concentration may be regulated by changing the amount of the aluminum trihydroxide. By hydrothermal treatment under regulated hydrogen ion concentration of the mixture, a needle-like aluminum hydroxide having different specific surface area is obtained. In case the hydrogen ion concentration is little, a needle-like aluminum hydroxide having large specific surface area may be obtained. In case the hydrogen ion concentration is much, a needle-like aluminum hydroxide having small BET specific surface area may be obtained.

In the method for producing a needle-like aluminum hydroxide, a reactant in a vessel after being subjected to the hydrothermal treatment is usually separated to solid and liquid fractions. The solid-liquid separation may, for example, be carried out by filtration. Further, the solid fraction may be subjected to rinse washing or repulp washing.

The needle-like aluminum hydroxide obtained by the above method has a main crystal phase of boehmite; and D_{L}, which is an average length of particle in form of needle, of usually 50 nm or more, preferably 100 nm or more and usually 2000 nm or less, preferably 1000 nm or less; and D_{L}/D_{W}, which is an aspect ratio represented by the ratio of length (D_{L}) to width (D_{W}), of usually 5 or more, preferably 15 or more and usually 200 or less, preferably 100 or less. D_{L}, D_{W} of the needle-like aluminum hydroxide may be measured by using an electron microscope.

In the present specification, the "main crystal phase" of the aluminum monohydroxide, the aluminum trihydroxide or the needle-like aluminum hydroxide means the main crystal phase determined by the following procedure: a sample of the aluminum monohydroxide, the aluminum trihydroxide or the needle-like aluminum hydroxide is analyzed by using an X-ray diffractometer, crystal phases are identified from peak data of the obtained XRD spectrum, and that of the highest relative peak intensity of them is used as the main crystal phase.

In the present specification, "average particle size" means weight average particle diameter.

### EXAMPLES

The present invention is described in more detail by following Examples, which should not be construed as a limitation upon the scope of the present invention.

### Crystal phase:

A sample was analyzed by using an X-ray diffractometer (trade name: Rint-2100, manufactured by Rigaku Denki), crystal phases were identified from peak data of the obtained XRD spectrum, and that of the highest relative peak intensity of them was used as the main crystal phase.

### BET specific surface area (m²/g)

It was measured by a nitrogen adsorption method.

### Average length of particle (nm), Average width of particle (nm):

A sample was photographed by using TEM or SEM, length and width of particle of each of 10 particles in this photo were measured, and average values of the measured values were defined as an average length of particle and an average width of particle, respectively.

### Average particle size (µm):

The particle size distribution was measured by using a laser scattering particulate size distribution analyzer [trade name: "Microtrac HRA" , manufactured by Lead and Northrup Corp. I , and the average particle size, which is a corresponding average diameter of agglomerated particle, was obtained from the resulted particle size distribution curve.

### Content of Na (%):

It was measured by an X-ray fluorescence spectroscopy.

### Example 1

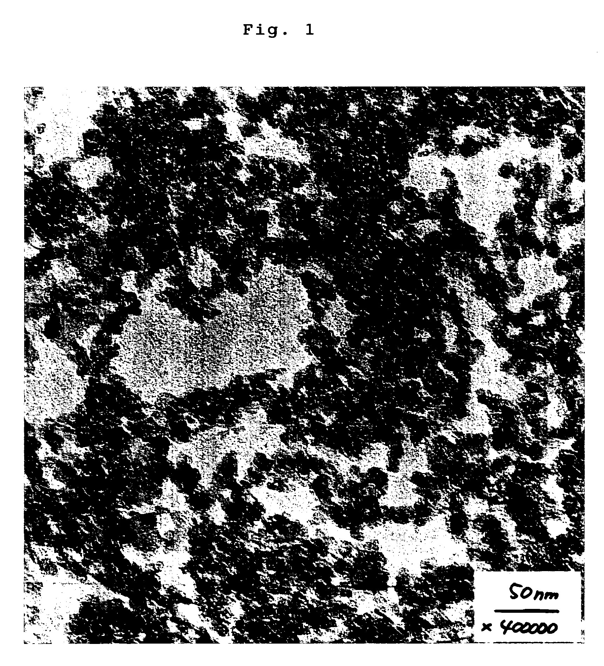

7 parts by weight of aluminum monohydroxide (trade name "CATAPAL D" , main crystal phase: boehmite, a main peak intensity of bayerite or gibbsite: 5% or less based on a main peak intensity of boehmite, BET specific surface area : 241 m²/g, average particle size: 58 µ m, manufactured by CONDEA) and 93 parts by weight of ion-exchanged water were mixed and dispersed with a continuous bead mill to obtain a slurry. The TEM image of the aluminum monohydroxide (trade name "CATAPAL D") is shown in Fig. 1.

2400 g of the slurry (168 g of aluminum monohydroxide), 1512 g of aluminum trihydroxide (trade name "C-301" , main crystal phase: gibbsite, a main peak intensity of boehmite or bayerite: 5% or less based on a main peak intensity of gibbsite, BET specific surface area: 6 m²/g, average particle size: 1.4 µm, Na₂O content: 0.3% by weight) and 19000 g of water were mixed, and the mixture was further mixed with 2182 g (10 mole) of magnesium acetate tetrahydrate (reagent grade, manufactured by Wako Pure Chemical Industries, Ltd.). The amount ratio of the aluminum monohydroxide to the aluminum trihydroxide was 10 parts by weight / 90 parts by weight.

The mixture was put in an autoclave having an inner volume of 30L (manufactured by TAIATSU TECHNO Corp.) and was hydrothermally treated under agitation at 180 °C for 4 hours. Then the reactant was cooled down to obtain a slurry. The slurry was added with 5 L of water, followed by solid-liquid separation with a centrifugal separator to obtain a solid. The solid was washed by mixing with 5 L of water and then being separated by solid-liquid separation to obtain an aluminum hydroxide. This washing was conducted totally three times.

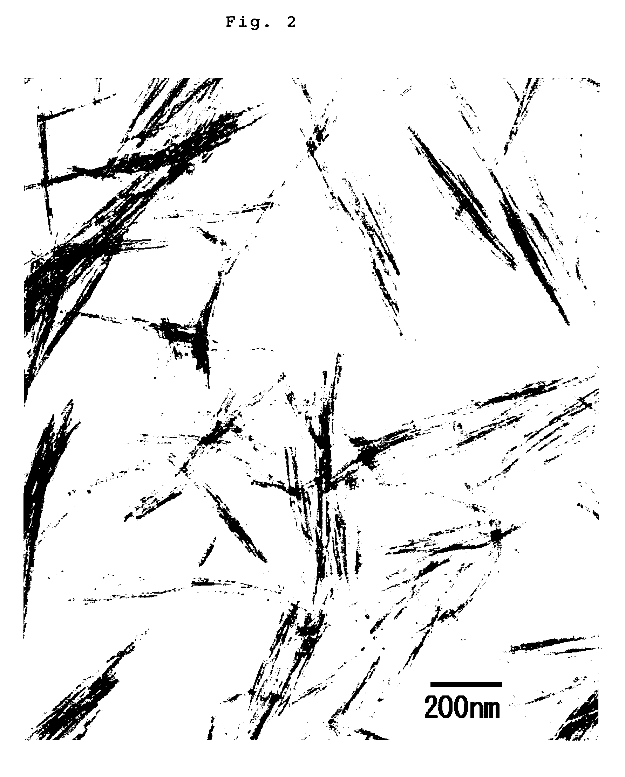

The physical properties of the aluminum hydroxide are shown in Table 1. The TEM image of the aluminum hydroxide is shown in Fig. 2.

### Example 2

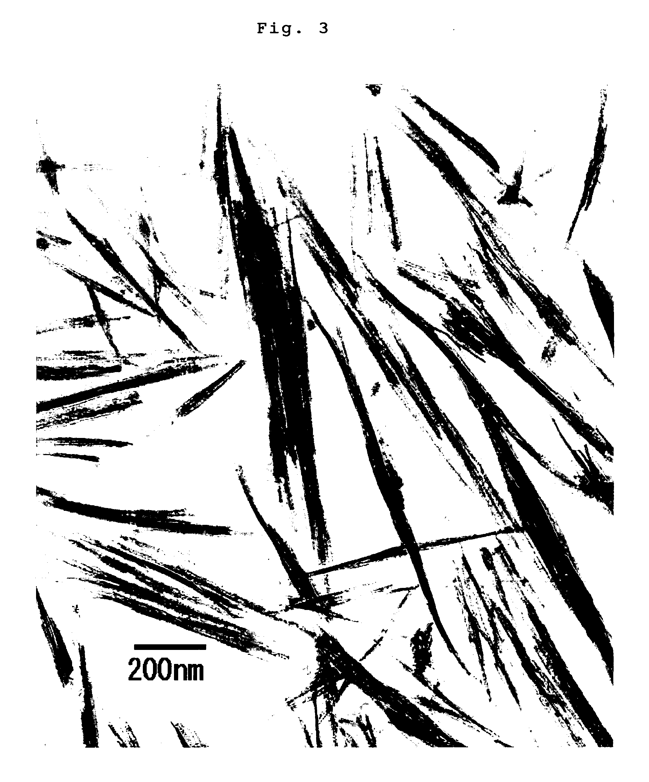

The same operation as in Example 1 was conducted excepting that the amount of aluminum monohydroxide slurry,
the amount of aluminum trihydroxide,
the amount of water and
the amount of magnesium acetate tetrahydrate were changed to 2130g (149g of aluminum monohydroxide),
2850g,
18000g and
4110g (19.2mole), respectively to obtain an aluminum hydroxide.
The physical properties of the aluminum hydroxide are shown in Table 1 . The TEM image of the aluminum hydroxide is shown in Fig. 3.

### Comparative Example 1

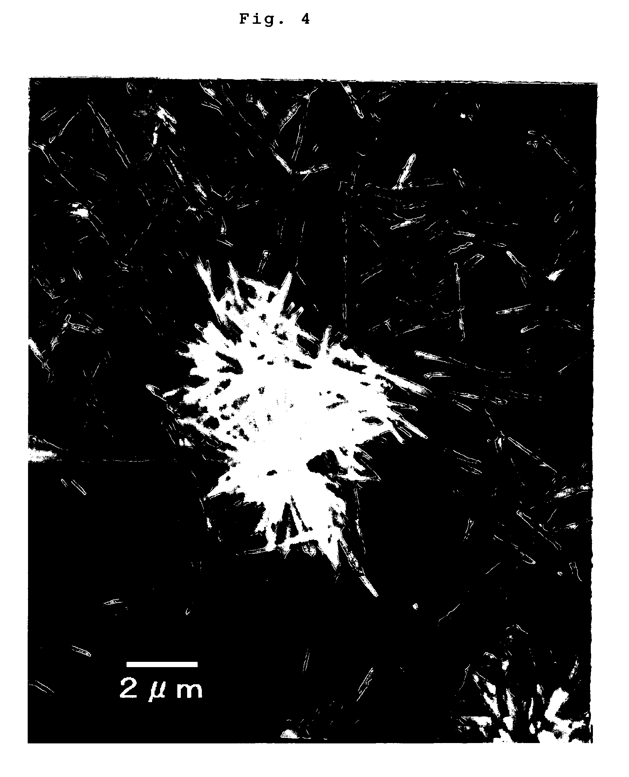

The same operation as in Example 1 was conducted excepting that the amount of aluminum monohydroxide slurry,
the amount of aluminum trihydroxide,
the amount of water and
the amount of magnesium acetate tetrahydrate were changed to 0g,
3940g,
25000g,
5050g (23.5 mole), respectively to obtain an aluminum hydroxide. The physical properties of the aluminum hydroxide are shown in Table 1. The SEM image of the aluminum hydroxide is shown in Fig. 4.

### Comparative Example 2

7 parts by weight of aluminum monohydroxide (trade name "CATAPAL D", main crystal phase: boehmite, BET specific surface area: 241m²/g, average particle size: 58 µm, manufactured by CONDEA) and 93 parts by weight of ion-exchanged water were mixed and dispersed with a continuous bead mill to obtain a slurry.

40 g of the slurry (2.8 g of aluminum monohydroxide), and 40 g of water were mixed, and the mixture was further mixed with 8.01g (0.04 mole) of magnesium acetate tetrahydrate (reagent grade, manufactured by Wako Pure Chemical Industries, Ltd.).

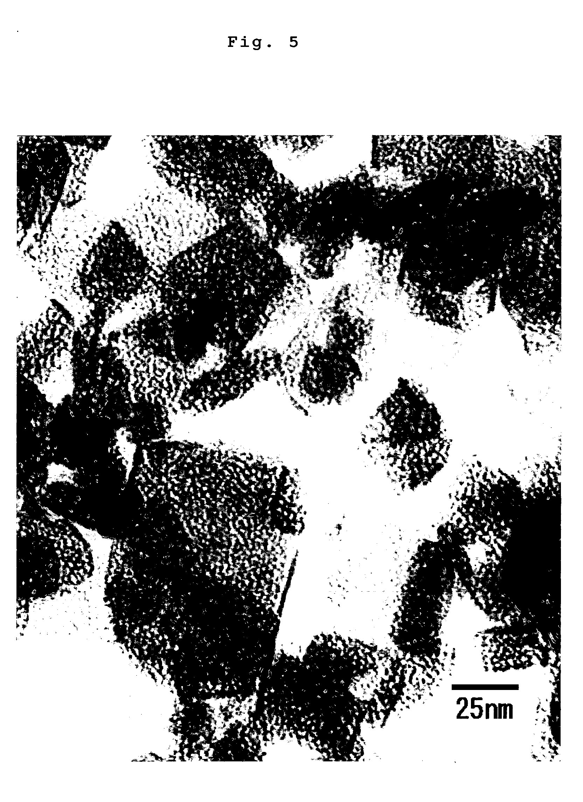

The mixture was put in an autoclave having an inner volume of 100 mL (manufactured by TAIATSU TECHNO Corp.) and was hydrothermally treated under agitation at 180 °C for 4 hours. Then the reactant was cooled down to obtain a slurry. The slurry was added with 5 L of water, followed by solid-liquid separation with a centrifugal separator to obtain a solid. The solid was washed by mixing with 5 L of water and then being separated by solid-liquid separation to obtain an aluminum hydroxide. Washing was conducted totally three times. The physical properties of the aluminum hydroxide are shown in Table 1. The TEM image of the aluminum hydroxide is shown in Fig. 5.

### ADVANTAGES OF THE INVENTION

According to the method of the present invention, a needle-like aluminum hydroxide having a large BET specific surface area can be produced.

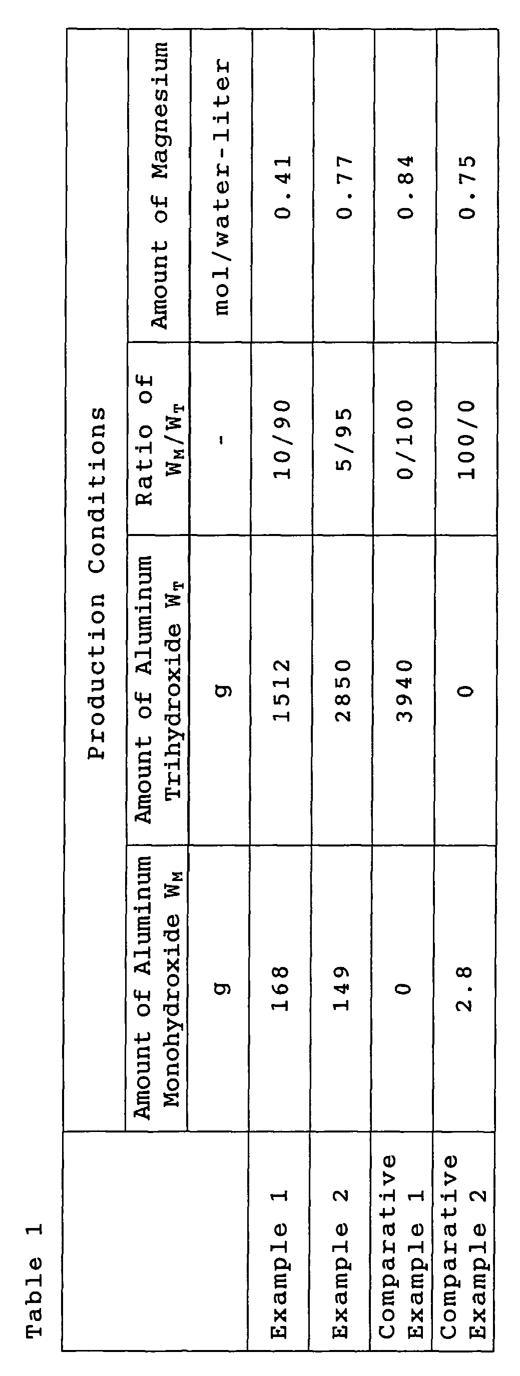

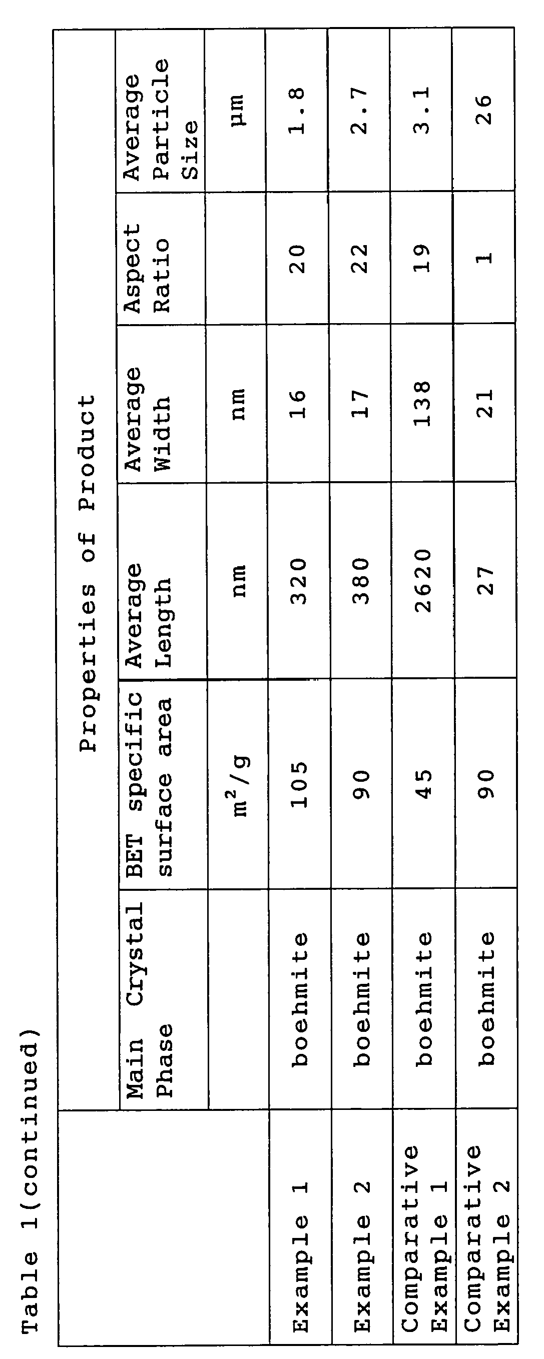

## Claims

1. A method for producing a needle-like aluminum hydroxide comprising steps of:
(1) mixing an aluminum monohydroxide and an aluminum trihydroxide; and
(2) hydrothermally treating the mixture in the presence of magnesium.

2. A method according to claim 1, wherein the amount ratio W_{M}/W_{T} is from 1/99 to 20/80, W_{M} represents the amount of aluminum monohydroxide by weight and W_{T} represents the amount of aluminum trihydroxide by weight.

3. A method according to claim 1 or 2, wherein the aluminum monohydroxide has a main crystal phase of boehmite.

4. A method according to any one of the preceding claims, wherein the aluminum monohydroxide has a BET specific surface area of from 100 m²/g to 500 m²/g.

5. A method according to any one of the preceding claims, wherein the aluminum trihydroxide has a main crystal phase of gibbsite.

6. A method according to any one of the preceding claims, wherein the aluminum trihydroxide has a BET specific surface area of from 5 m²/g to 100 m²/g.

7. A method according to any one of the preceding claims, wherein the aluminum trihydroxide has an average particle size of from 0.1 µm to 5 µm.

8. A method according to any one of the preceding claims, wherein the aluminum trihydroxide contains Na₂O content of from 0.01 % to 2% by weight.
